**Europäisches Patentamt**

**European Patent Office**

**Office européen des brevets**

(11) Veröffentlichungsnummer: **0 250 890**
**B1**

(12) **EUROPÄISCHE PATENTSCHRIFT**

(45) Veröffentlichungstag der Patentschrift:
26.07.89

(51) Int. Cl.⁴: **F16N 3/12**

(21) Anmeldenummer: 87107868.9

(22) Anmeldetag: 30.05.87

(54) **Handhebelpresse zum Verpressen von viskosen Massen.**

(30) Priorität: 19.06.86 DE 8616361 U

(43) Veröffentlichungstag der Anmeldung:
07.01.88 Patentblatt 88/1

(45) Bekanntmachung des Hinweises auf die Patenterteilung:
26.07.89 Patentblatt 89/30

(84) Benannte Vertragsstaaten:
AT CH GB IT LI NL

(56) Entgegenhaltungen:
AT-B- 180 783
CH-A- 150 689
DE-A- 2 101 083
DE-A- 3 440 893

(73) Patentinhaber: REINER CHEMISCHE FABRIK GMBH &
CO, D-6751 Weilerbach(DE)

(72) Erfinder: Schumann, Axel, Dipl.-Ing., Kölchenstrasse 10,
D-6750 Kaiserlautern(DE)

(74) Vertreter: Patentanwälte Dipl.-Ing. F.W. Möll Dipl.-Ing.
H.Ch. Bitterich, Langstrasse 5 Postfach 2080,
D-6740 Landau(DE)

## Beschreibung

Die Erfindung betrifft eine Handhebelpresse zum Verpressen von viskosen Massen gemäß dem Oberbegriff des Anspruchs 1.

Eine derartige Handhebelpresse ist bekannt aus dem DE-GM 84 32 771. Sie dient zum Abschmieren der unterschiedlichsten Schmierstellen, insbesondere an Baumaschinen, anstelle der beispielsweise in der DIN 1283 genormten Handhebelfettpressen, die konstruktionsbedingt mit zwei Händen betätigt werden müssen.

Im Hochdruckteil derartiger Handhebelfettpressen werden Drücke bis zu 400 Bar erzeugt. Das Nachfördern der Fette aus dem Vorratsbehälter erfolgt durch das beim Ansaughub entstehende Vakuum. Die in dem genannten Gebrauchsmuster beschriebene Presse ist als Einhandpresse ausgebildet, wobei eine Rückstellfeder den Ansaughub des Hochdruckkolbens bewirkt. Dadurch konnte das Nachsaugen auch sehr viskoser, beispielsweise kalter Fette erheblich verbessert und der Gebrauch der Handhebelpresse insgesamt vereinfacht werden. Der Benutzer der Einhandpresse hat seine zweite Hand zum Festhalten frei.

Der vorliegenden Erfindung liegt die Aufgabe zugrunde, die eingangs beschriebene Handhebelpresse noch leichter auszubilden, die Gewichtsverteilung weiter zu optimieren, die Abdichtung zwischen Handhebelpresse und Vorratsbehälter weiter zu verbessern und zu vereinfachen und die Erzeugung hoher Preßdrücke trotz Einhandbedienung zu ermöglichen.

Diese Aufgabe wird gelöst durch die kennzeichnenden Merkmale des Anspruchs 1.

Die spezielle Anordnung der Handhebel gibt eine günstige Gewichtsverteilung, ohne daß der Vorratsbehälter bei der Arbeit stört. Der Anschlußstutzen erlaubt ein beliebig häufiges Wechseln des Vorratsbehälters, zum Beispiel zum Verpressen unterschiedlicher Fettarten, wobei auch bei Wiederverwendung desselben Vorratsbehälters keine Abdichtprobleme auftreten und verhindert sicher ein ungewolltes Lösen der luftdichten Verbindung während der Arbeit. Der Vorratsbehälter kann restlos entleert werden.

Die größten Vorteile der Erfindung werden jedoch erreicht durch die Summe der Maßnahmen, die der konsequenten Reduzierung aller Toträume im Hochdruckteil dienen. Dies ist einmal die besondere Form der Verschlußschraube, die die jeweils zu verschließende Hochdruck-Auslaßöffnung so weitgehend wie technisch möglich ausfüllt, die vorzugsweise ovale oder schlitzförmige Ausbildung des Querschnitts der Niederdruck-Ansaugöffnung, wobei deren Längserstreckung quer zum Kolbenweg gerichtet ist, und die ebenso bevorzugte Begrenzung von Ansaughub und Arbeitshub des Kolbens derart, daß seine Vorderkante unmittelbar hinter der Niederdruck-Ansaugöffnung bzw. an der Hochdruck-Auslaßöffnung zum Stehen kommt.

In dieselbe Richtung geht die bevorzugte Ausgestaltung des Rückschlagventils, dessen Innenbohrung eine Stufe aufweist, wodurch der Einschraubweg der Ventilschraube exakt begrenzt wird, was wiederum für einen exakten Schließdruck der Druckfeder auf die Stahlkugel sorgt. Je schneller das Rückschlagventil auch bei Verarbeitung hochviskoser Massen schließt, desto geringer ist der Druckverlust durch zurückströmendes Fett und desto kleiner kann das Zylindervolumen der Hochdruckpumpe gewählt werden, was wiederum zu einer Verringerung des Gesamtvolumens und -gewichts der Handhebelpresse führt.

Gemäß einer vorteilhaften Weiterbildung der Erfindung ist das Zugglied zwischen Zylindergehäuse und beweglichem Handhebel als U-förmig Lasche ausgebildet, wobei gemäß einer bevorzugten Weiterbildung der Erfindung die Rückstellfeder zwischen dem beweglichen Handhebel und der U-förmigen Lasche angreift.

Bei geeigneter Ausbildung von Zugglied und Zylindergehäuse kann dieses gleichzeitig als Anschlag dienen, welches den Rückstellweg des beweglichen Handhebels und damit den Ansaughub des Kolbens begrenzt.

Gemäß einer bevorzugten Ausgestaltung der Erfindung ist die Anschlußöffnung im Vorratsbehälter-Anschlußstutzen derart ausgebildet, daß ein äußerer Zylinderabschnitt mit größerem Querschnitt vorgesehen ist, der ein Sägezahngewinde trägt, daß sich daran ein konischer Abschnitt anschließt, der dann in einen inneren Zylinderabschnitt mit kleinerem Querschnitt übergeht, an den sich die eigentliche Niederdruck-Ansaugöffnung anschließt. Die Außenkontur des Vorratsbehälters ist im Anschlußbereich entsprechend geformt. Durch geeignete Materialwahl und -stärke wird dem Vorratsbehälter ein relativ steifer, jedoch noch elastischer Anschlußbereich gegeben.

Die Abdichtung kann noch erheblich verbessert werden, wenn der innere Zylinder als sehr steiler Quetschkonus ausgebildet ist, wobei insbesondere das entsprechende Ansatzstück des Vorratsbehälters auf seiner Außenseite glatt zylindrisch und auf seiner Innenseite längs gerieft ist.

Insbesondere diese Längsriefung ermöglicht ein elastisches Nachgeben des Ansatzstücks, ohne daß das Material, bei dem es sich vorzugsweise um Polyethylen handelt, dabei plastisch verformt wird. Auf diese Weise ist es möglich, den Vorratsbehälter beliebig oft auf- und abzuschrauben, ohne daß Undichtigkeiten entstehen.

Anhand der Zeichnung soll die Erfindung in Form eines Ausführungsbeispieles näher erläutert werden. Es zeigen:

Fig. 1 eine teilweise geschnittene Draufsicht auf eine Handhebelpresse mit eingeschraubter Vorratstube und

Fig. 2 eine Draufsicht auf den Anschlußbereich einer Vorratstube.

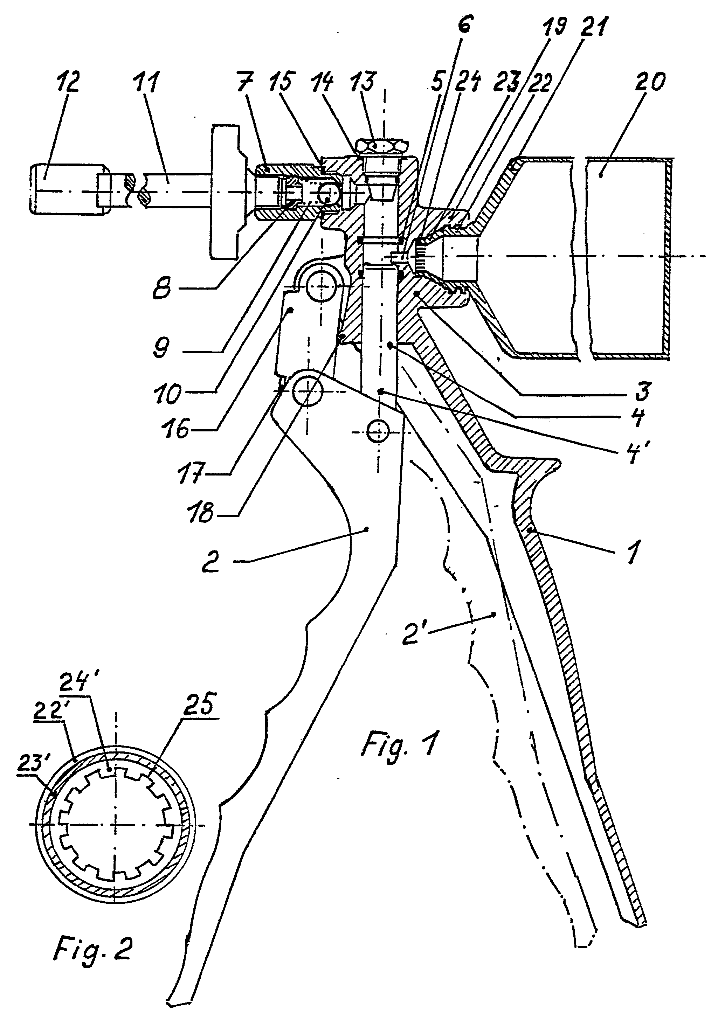

In Fig. 1 erkennt man einen feststehenden Handhebel 1 und einen beweglichen Handhebel 2, die nach Art eines Pistolengriffes zusammenwirken. Der feststehende Handhebel 1 ist einstückig mit einem Zylindergehäuse 3 einer Hochdruckpumpe verbunden. Im Zylindergehäuse 3 ist ein Kolben 4 unter der Wirkung des Handhebels 2 längs verschiebbar.

O-Ringe 5 verbessern die Abdichtung des Kolbens 4.

Der bewegliche Handhebel 2 ist über ein U-förmig gebogenes Zugglied 16 am Zylindergehäuse 3 gelagert. Dadurch ist die Geradführung des Kolbens 4 gewährleistet. Eine Rückstellfeder 17 zwischen beweglichem Handhebel 2 und Zugglied 16 bewegt nach einem Arbeitshub, wobei der bewegliche Handhebel 2 die Position 2' einnimmt, den Handhebel 2 in seine Ausgangsstellung zurück und führt dabei den Ansaughub des Kolbens 4 durch.

Zwischen den beiden O-Ringen 5 erkennt man eine ovale oder schlitzförmige Niederdruck-Ansaugöffnung 6, durch die zu verpressendes Material, beispielsweise Schmierfett, aus einem Vorratsbehälter 20 in den Raum vor dem Kolben 4 einströmt.

Am vorderen Ende des Pumpenraums sind zwei Hochdruck-Auslaßöffnungen vorgesehen, wobei die eine koaxial mit dem Kolben 4, die andere senkrecht dazu gerichtet ist. In die benutzte Hochdruck-Auslaßöffnung ist unter Zwischenlage eines Dichtrings 15 ein Rückschlagventil 7 eingeschraubt, das an seinem vorderen Ende ein Düsenrohr 11 mit Düse 12 trägt.

Das Rückschlagventil 7 ist auf ein schnelles Schließen optimiert. Zu diesem Zweck besitzt seine Innenbohrung eine Stufe, die ein exaktes Positionieren der Ventilmutter 8 ermöglicht, die eine kegelige Druckfeder 9 auf eine Schließkugel 10 preßt.

In die nicht benutzte Hochdruck-Auslaßöffnung ist mit Hilfe eines Dichtrings 14 ein Verschlußstück 13 eingeschraubt, das so ausgebildet ist, daß es die Hochdruck-Auslaßöffnung ausfüllt. Dadurch werden Toträume vermieden, die völlig unerwünschte Luftblasen aufnehmen könnten, die den Preßdruck drastisch reduzieren.

Diese Reduzierung der Toträume wird dadurch unterstützt, daß Arbeitshub und Ansaughub des Kolbens 4 derart begrenzt sind, daß die Vorderkante des Kolbens 4 einerseits unmittelbar hinter der Niederdruck-Ansaugöffnung 6, andererseits unmittelbar vor der Hochdruck-Auslaßöffnung zum Stehen kommt.

Die Funktion der Handhebelpresse hängt im wesentlichen davon ab, daß keine Luft in die Hochdruckpumpe gelangen kann. Diesem Zweck dient nicht zuletzt auch die besondere Konstruktion des Anschlußstutzens 19 für den Vorratsbehälter 20. Die Anschlußöffnung im Stutzen 19 besitzt zunächst einen zylindrischen Abschnitt, der ein Sägezahngewinde 22 trägt. An diesen schließt sich ein Konusabschnitt 23 an, der dann in einen inneren Zylinderabschnitt 24 mit geringerem Durchmesser übergeht.

Das Vorderteil 21 des Vorratsbehälters 20 ist relativ steif ausgebildet, muß jedoch noch so weit elastisch sein, daß die Dichtwirkung im Anschlußstutzen 19 gewährleistet ist. Der übrige Bereich des Vorratsbehälters 20 ist dagegen möglichst nachgiebig ausgebildet, um eine sichere Entleerung unter der Wirkung des äußeren Luftdrucks zu gewährleisten.

Die Ausgestaltung des Anschlußstücks des Vorratsbehälters 20 ist in Fig. 2 in vergrößerter Darstellung gezeigt. Man erkennt einen zylindrischen Anschlußstutzen 24', dessen Außenseite glatt und zylindrisch ist, dessen Innenseite jedoch Längsriefen 25 aufweist. Diese Längsriefen 25 verbessern die elastischen Eigenschaften des Anschlußstücks, so daß der Vorratsbehälter 20 beliebig oft eingeschraubt und wieder ausgeschraubt werden kann, ohne daß Undichtigkeiten, beispielsweise durch eine plastische Verformung des Kunststoffmaterials, aus dem der Vorratsbehälter 20 besteht, zu befürchten sind.

An das zylindrische Anschlußstück 24' schließt sich ein Konusabschnitt 23' an, um den herum das Sägezahn-Gegengewinde 22' zu erkennen ist.

Die Verwendung eines Sägezahn-Gewindes verhindert ein ungewolltes Lösen oder Lockern der Schraubverbindung, wobei das Herstellen der Schraubverbindung sehr einfach ist.

Die Metallteile der Handhebelpresse bestehen - mit Ausnahme des Kolbens 4 und der Feder 17 - aus Leichtmetall. Die Längserstreckung der Handhebel 1,2 folgt der Achse 4' des Kolbens 4. Der Anschlußstutzen 19 befindet sich auf der Seite des feststehenden Handhebels 1. Dies führt zu einem insgesamt geringen Gewicht bei gleichzeitig sehr günstiger Gewichtsverteilung, wodurch auch bei längerem Arbeiten mit der Handhebelpresse keine Ermüdung zu erwarten ist. Alle Schmierstellen sind einwandfrei zu erreichen, der Vorratsbehälter 20 stört bei der Arbeit nicht.

Da der Vorratsbehälter 20 auf die Handhebelpresse aufgeschraubt wird, ist sein Aufdruck jederzeit lesbar, so daß die Sicherheit besteht, daß jederzeit das richtige Material verpreßt wird.

**Patentansprüche**

1. Handhebelpresse zum Verpressen von viskosen Massen, insbesondere von Schmierfetten, enthaltend eine Hochdruck-Kolbenpumpe mit Zylindergehäuse (3), Kolben (4) und Hochdruck-Auslaßöffnung, einen feststehenden und einen beweglichen Handhebel (1,2), die nach Art eines Pistolengriffs zusammenwirken, ein gelenkiges Zugglied (16) zwischen dem Zylindergehäuse (3) und dem beweglichen Handhebel (2), eine Rückstellfeder (17) für den beweglichen Handhebel (2), einen Anschlußstutzen (19) für den luftdichten Anschluß eines luftdichten, aus nachgiebigem Material bestehenden Vorratsbehälters (20) für die viskose Masse und eine Niederdruck-Ansaugöffnung (6), dadurch gekennzeichnet, daß Zylindergehäuse (3) und feststehender Handhebel (1) einstückig ausgebildet sind, daß die Längserstreckung der Handhebel (1, 2) der Achse (4') des Kolbens (4) folgt, daß die Hochdruck-Auslaßöffnung von zwei um 90 Grad versetzten Öffnungen gebildet wird, in die ein Rückschlagventil (7) bzw. ein Verschlußstück (13) einschraubbar sind und daß das Verschlußstück (13) die zum Kolben (4) koaxiale Hochdruck-Auslaßöffnung weitgehend ausfüllt, daß der Anschlußstutzen (19) eine Anschlußöffnung mit einem äußeren Zylinderabschnitt (22), einem Konusabschnitt (23) und einem inneren Zylinderabschnitt (24) besitzt, wobei im äußeren Zylinderabschnitt (22) ein Sägezahn-Gewinde vorgesehen ist, und daß der Vorratsbehälter (20) im Bereich des Anschlußstutzens (19) steif ausgebildet ist.

2. Handhebelpresse nach Anspruch 1, dadurch gekennzeichnet, daß die Rückstellfeder (17) zwischen beweglichem Handhebel (2) und Zugglied (16) angreift.

3. Handhebelpresse nach Anspruch 1 oder 2, dadurch gekennzeichnet, daß der Rückstellweg des beweglichen Handhebels (2) durch einen Anschlag (18) am Zylindergehäuse (3) begrenzt ist.

4. Handhebelpresse nach wenigstens einem der Ansprüche 1 bis 3, dadurch gekennzeichnet, daß das Zugglied (16) eine U-förmig gebogene Lasche ist und daß der Anschlag (18) mit dem Zugglied (16) zusammenwirkt.

5. Handhebelpresse nach wenigstens einem der Ansrpüche 1 bis 4, dadurch gekennzeichnet, daß der Querschnitt der Niderdruck-Ansaugöffnung (6) oval oder schlitzförmig ist, wobei die Längserstreckung quer zum Kolbenweg gerichtet ist.

6. Handhebelpresse nach wenigstens einem der Ansprüche 1 bis 5, dadurch gekennzeichnet, daß der Ansaughub des Kolbens (4) derart begrenzt ist, daß seine Vorderkante unmittelbar hinter der Niederdruck-Ansaugöffnung (6) stehen bleibt.

7. Handhebelpresse nach wenigstens einem der Ansprüche 1 bis 6, dadurch gekennzeichnet, daß der Arbeitshub des Kolbens 84) derart begrenzt ist, daß seine Vorderkante unmittelbar an der Hochdruck-Auslaßöffnung stehen bleibt.

8. Handhebelpresse nach wenigstens einem der Ansprüche 1 bis 7, dadurch gekennzeichnet, daß die Handhebel (1, 2) und das Zylindergehäuse (3) aus Leichtmetall, der Vorratsbehälter (20) aus Polyethylen besteht.

9. Handhebelpresse nach wenigstens einem der Ansprüche 1 bis 8, dadurch gekennzeichnet, daß der innere Zylinder (24) des Anschlußstutzens (19) als steiler Quetschkonus ausgebildet ist une daß der Vorratsbehälter (20) ein entsprechendes Ansatztück (24') besitzt, dessen Außenseite glatt zylindrisch und dessen Innenseite Längs gerieft ist.

10. Handhebelpresse nach wenigstens einem der Ansprüche 1 bis 9, dadurch gekennzeichnet, daß die Innenbohrung des Rückschlagventils (7) eine Stufe aufweist, die die Einschraubtiefe der Ventilschraube (8) exakt begrenzt.

**Claims**

1. A lever-type hand gun for injecting viscous substances, in particular lubricating grease, comprising a high-pressure piston pump with a cylindrical housing (3), a piston (4) and a high-pressure outlet aperture, stationary and movable hand levers (1, 2) which co-operate in the manner of a pistol grip, an articulated tension member (16) between the cylindrical housing (3) and the movable hand lever (2), a return spring (17) for the movable hand lever (2), a connecting socket (19) for the air-tight connection of an air-tight supply container (20) for the viscous substance, which container is made of flexible material, and a low-pressure intake aperture (6), characterised in that the cylindrical housing (3) and the stationary hand lever (1) are formed in one piece, in that the longitudinal extent of the hand levers (1, 2) follows the axis (4') of the piston (4), in that the high-pressure outlet aperture is formed by two apertures offset by 90°, into which a non-return valve (7) and a closure member (13) respectively can be screwed and in that the closure member (13) substantially fills up the high-pressure outlet aperture which is coaxial to the piston (4), in that the connecting socket (19) has a connecting aperture with an outer cylindrical portion (22), a conical portion (23) and an inner cylindrical portion (24), a sawtooth thread being provided in the outer cylindrical portion (22), and in that the supply container (20) is rigid in the vicinity of the connecting socket (19).

2. A lever-type hand gun according to Claim 1, characterised in that the return spring (17) engages between the movable hand lever (2) and the tension member (16).

3. A lever-type hand gun according to Claim 1 or 2, characterised in that the return travel of the movable hand lever (2) is limited by a stop member (18) on the cylindrical housing (3).

4. A lever-type hand gun according to at least one of Claims 1 to 3, characterised in that the tension member (16) is a strap bent into a U-shape and in that the stop member (18) co-operates with the tension member (16).

5. A lever-type hand gun according to at least one of Claims 1 to 4, characterised in that the cross-section of the low-pressure intake aperture (6) is oval or slot-shaped, the longitudinal extent of which is directed transversely to the piston travel.

6. A lever-type hand gun according to at least one of Claims 1 to 5, characterised in that the intake stroke of the piston (4) is limited in such a way that its front edge stops immediately behind the low-pressure intake aperture (6).

7. A lever-type hand gun according to at least one of Claims 1 to 6, characterised in that the working stroke of the piston (4) is limited in such a way that its front edge stops immediately adjacent to the high pressure outlet aperture.

8. A lever-type hand gun according to at least one of Claims 1 to 7, characterised in that the hand levers (1, 2) and the cylindrical housing (3) consist of light metal and the supply container (20) consists of polyethylene.

9. A lever-type hand gun according to at least one of Claims 1 to 8, characterised in that the inner cylindrical portion (24) of the connecting socket (19) is in the form of a steep compressed cone and in that the supply container (20) has a corresponding extension member (24'), the outside of which is smooth and cylindrical and the inside of which is grooved longitudinally.

10. A lever-type hand gun according to at least one of Claims 1 to 9, characterised in that the internal bore of the non-return valve (7) has a step which accurately delimits the depth to which the valve screw (8) can be screwed in.

**Revendications**

1. Pistolet à levier à bras pour injecter sous pression des masses visqueuses, notamment des graisses lubrifiantes, contenant une pompe à piston à haute pression avec un carter cylindrique (3), un piston (4) et une ouverture de sortie à haute pression, un levier à main fixe et un levier à main mobile (1, 2) qui coopèrent à la manière d'une poignée pistolet, un élément de traction articulé (16) entre le carter cylindrique (3) et le levier à main mobile (2), un ressort de rappel (17) pour le levier à main mobile (2), une tubulure de raccordement (19) pour le raccordement étanche à l'air d'un réservoir (20) de masse visqueuse, lequel est étanche à l'air et réalisé en matériau flexible, et une ouverture d'aspiration à basse pression (6), caractérisé en ce que le carter cylindrique (3) et le levier à main fixe (1) sont réalisés en une pièce, en ce que la direction longitudinale des leviers à main (1, 2) suit l'axe (4') du piston (4), en ce que l'ouverture de sortie à haute pression consiste en deux ouvertures décalées de 90°, dans lesquelles peuvent être respectivement vissés un clapet antiretour (7) et un obturateur (13), et en ce que l'obturateur (13) remplit largement l'ouverture de sortie à haute pression coaxiale au piston (4), en ce que la tubulure de raccordement (19) possède une ouverture de raccordement avec une partie cylindrique extérieure (22), une partie conique (23) et une partie cylindrique intérieure (24), un filetage en dents de scie étant prévu dans la partie cylindrique extérieure (22), et en ce que le réservoir (20) est prévu rigide dans la région de la tubulure de raccordement (19).

2. Pistolet à levier à bras selon la revendication 1, caractérisé en ce que le ressort de rappel (17) agit entre le levier à main mobile (2) et l'élément de traction (16).

3. Pistolet à levier à bras selon la revendication 1 ou 2, caractérisé en ce que la course de rappel du levier à main mobile (2) est limitée par une butée (18) prévue sur le carter cylindrique (3).

4. Pistolet à levier à bras selon l'une des revendications 1 à 3, caractérisé en ce que l'élément de traction (16) est une patte courbée en forme de U, et en ce que la butée (18) coopère avec l'élément de traction (16).

5. Pistolet à levier à bras selon l'une des revendications 1 à 4, caractérisé en ce que la section de l'ouverture d'aspiration à basse pression (6) est ovale ou en forme de fente, sa direction longitudinale étant orientée perpendiculairement à la course du piston.

6. Pistolet à levier à bras selon l'une des revendications 1 à 5, caractérisé en ce que la course d'aspiration du piston (4) est limitée de façon que son bord avant reste directement derrière l'ouverture d'aspiration à basse pression (6).

7. Pistolet à levier à bras selon l'une des revendications 1 à 6, caractérisé en ce que la course de travail du piston (4) est limitée de façon que son bord avant reste directement contre l'ouverture de sortie à haute pression.

8. Pistolet à levier à bras selon l'une des revendications 1 à 7, caractérisé en ce que les leviers à main (1, 2) et le carter cylindrique (3) sont réalisés en métal léger, et le réservoir (20) en polyéthylène.

9. Pistolet à levier à bras selon l'une des revendications 1 à 8, caractérisé en ce que le cylindre intérieur (24) de la tubulure de raccordement (19) est réalisé sous la forme d'un cône de serrage à pente raide, et en ce que le réservoir (20) possède un embout (24') correspondant, dont le côté extérieur est cylindrique et lisse, et qui est strié le long de son côté intérieur.

10. Pistolet à levier à bras selon l'une des revendications 1 à 9, caractérisé en ce que l'alésage intérieur du clapet antiretour (7) présente un gradin qui limite précisément la profondeur de vissage de la vis de clapet (8).

Fig. 1

Fig. 2